# EUROPEAN PATENT SPECIFICATION

(11) **EP 1 374 613 B1**
(45) Date of publication and mention of the grant of the patent: **09.03.2016**
(21) Application number: 02748650.5
(22) Date of filing: 05.04.2002
(51) Int. Cl.: G06F 21/71, H04W 88/02

(54) **SECURING INFORMATION IN MEMORY OF AN ELECTRONIC DEVICE**
INFORMATIONSSICHERUNG IM SPEICHER EINES ELEKTRONISCHEN GERÄTS
SÉCURISATION DES INFORMATIONS DANS UNE MÉMOIRE D'UN APPAREIL ÉLECTRONIQUE

(30) Priority: 05.04.2001 US 281369 P; 04.04.2002 US 114955
(43) Date of publication of application: 02.01.2004
(73) Proprietor: Telefonaktiebolaget LM Ericsson (publ), 164 83 Stockholm (SE)
(72) Inventor: SMEETS, Bernard, S-240 10 Dalby (SE); OSTHOFF, Harro, 90411 Nürnberg (DE); SVEDENMARK, Rickard, SE-212 13 Malmö (SE)
(74) Representative: Ericsson
(86) International application number: PCT/EP2002/003816
(87) International publication number: WO 2002/087269

(56) References cited:
- WO-A-91/09484
- US-A- 6 026 293
- US-A- 6 138 005

## Description

### BACKGROUND OF THE INVENTION

### Field of the Invention

The present invention relates to securing information in memory and, more specifically, to an apparatus and method for ensuring the security of stored information by securing a hash value in read-only memory.

### Description of the Related Art

The cellular telephone industry has made phenomenal strides in commercial operations in the United States as well as the rest of the world. Growth in major metropolitan areas has far exceeded expectations and is rapidly outstripping system capacity. If this trend continues, the effects of this industry's growth will soon reach even the smallest markets. Innovative solutions are required to meet these increasing capacity needs as well as maintain high quality service and avoid rising prices.

Upon accessing a radio communications network, cellular telephones and similar mobile terminal devices identify themselves to the network through the use of terminal identifiers that are internal to each cellular telephone. One such identifier standard is the International Mobile Equipment Identity (hereinafter "IMEI") standard that is designed to uniquely identify each mobile communication device within the Global System for Mobile Communication (hereinafter "GSM") standard. This standard is described in 3GPP TS 23.003 V4.0.0 (March, 2001), the technical specification of which has been produced by the 3^{rd} Generation Partnership Project and the contents of which are incorporated herein by reference. The IMEI is designed to be numeric data not to exceed fifteen digits and is typically stored in non-volatile memory when the telephone is manufactured. The United States Federal Communications Commission (hereinafter "FCC") has codified a definition of electronic serial numbers for cellular telephones at 47 C.F.R. § 22.919.

The FCC standard specifies that the electronic serial number for uniquely identifying a cellular mobile transmitter is a 32 bit number that must be permanently attached to a main circuit board of the transmitter.

The owner or user of a cellular telephone must typically first register the telephone with a communications network provider prior to being able to utilize the telephone on the network. The registration process typically includes the communications network provider acquiring the identifier of the telephone and linking this information with customer and feature information provided by the owner of the telephone. By matching the telephone's identifier to information related to the owner of the telephone as stored and maintained by the communications network provider, feature services are made available to the telephone and various subsequent access, usage, and access charges are accrued against the registered owner of the telephone.

In recent years, legitimate, active cellular telephone identifiers have been appropriated by electronic pirates and hackers and have been copied into one or more other cellular telephones, replacing the internal identifiers in those telephones. In this manner, the identity of legitimate telephones can be copied into stolen telephones to make the stolen telephones appear to a mobile network as legitimate telephones. When these modified cellular telephones are utilized on a mobile communications network, they electronically impersonate the legitimate cellular telephone, with all resultant charges being billed against the owner of the legitimate cellular telephone. The "stealing" of cellular telephone identities has become a large and expensive problem. One manner by which thieves have been able to discover legitimate cellular telephone identifiers for purposes of subsequent misappropriation is by electronically intercepting the hand-shaking between the cellular telephone and the communications network to determine and appropriate the identifier of the cellular telephone. Additionally, some mobile communications devices have the identifiers printed on a label affixed to the devices, where the identifiers are easily perceived.

Securing the integrity of the identifier information in a mobile device and thereby preventing the impersonation of legitimate mobile devices can be accomplished by preventing the identifier information from being modified once it is stored within the mobile device. For example, the identifier information can be written into the mobile device's read-only memory ("ROM"). However, such protection mechanisms are expensive since they require a unique ROM code per device.

Alternatively, the security of the identifier information stored in the mobile device can be protected, and subsequent use of the altered device can be restricted, by detecting when the identification information has been changed from the original configuration stored in the memory.

One family of information change detection systems utilizes cryptographic hash algorithms to create a hash value, or a checksum, of the terminal identifier during the manufacture of the terminal device, with the terminal identifier and the hash value being stored in memory in the device. Upon start-up or power-up of the terminal device, the cryptographic hash algorithm is applied to the stored terminal identifier to create a temporary hash value. The temporary hash value is compared with the stored hash value; and if the two hash values do not match, the terminal identifier is presumed to have been altered and start-up of the device is terminated. Some systems include the use of a secret key in the cryptographic process in an attempt to create a more complex hash value which will be less susceptible to hacking. The use of hash algorithms and message authorization codes (as secret keys are occasionally termed) to protect the integrity of data are known methodologies and are discussed in more detail in Chapter 9 of "Handbook of Applied Cryptology" by Menezes, Oorschot, and Vanstone (CRC Press 1997). Unfortunately, the algorithm, the secret key, and the computed hash value are typically stored in electronically erasable programmable read-only memory ("EEPROM"), which is vulnerable to unauthorized and often undetectable access. For example, a hacker seeking to appropriate a legitimate terminal identifier for use in a terminal device could rewrite not only the terminal identifier information but also the cryptographic hash algorithm routine in the terminal device such that applying the new algorithm to the new identification information would produce the originally-calculated and stored hash value and thereby permit the reprogrammed terminal device to impersonate the legitimate device from which the terminal identifier was appropriated.

There is therefore a need to overcome the problems associated with existing mechanisms for securing information in the memory of a terminal device.

US 6,026,293 A discloses methods and apparatus for preventing tampering with memory in an electronic device, such as a cellular telephone. An electronic device having a memory and a processing means contains logic that is used to perform a one-way hash calculation on the device's memory contents whereby an audit hash value, or signature, of such contents is derived. The audit hash value is compared to an authenticated valid hash value derived from authentic memory contents. A difference between the audit and valid hash values can be indicative of memory tampering.

US 6,138,005 A discloses a method for verifying personalization for a mobile radio terminal having a detachable Subscriber identity module (SIM) card. The method includes the step of storing verification mode setting information in the terminal pertaining to verification modes that include a normal and a forced verification mode. The information is then accessed to determine whether the mode setting information pertains to the forced verification mode, when a predefined condition exists. When the mode setting information is set to the forced verification mode, it is determined whether a SIM lock code stored in the mobile radio terminal is identical to a SIM lock code stored in the SIM card. When the SIM lock codes are not identical, it is determined whether a password input by a user is identical to a password stored in the terminal. Additionally, the method includes the step of blocking the terminal when the passwords are not identical.

### SUMMARY OF THE INVENTION

It should be emphasized that the term "comprises" or "comprising" when used in this specification is taken to specify the presence of stated features, integers, steps, or components but does not preclude the presence or addition of one or more other features, integers, steps, components, or groups thereof.

The present invention is directed toward an apparatus and method for securing information in the memory of an electronic device according to claims 1 and 9. A terminal identifier that identifies the device is stored in memory in the device. Also stored in memory of the device is a cryptographic hash algorithm and a hash value that is calculated from the application of the hash algorithm against the terminal identifier. The terminal identifier, for the terminal identifier and the hash value are all stored in protected memory within the electronic device with the protected memory being read only memory the hash algorithm, one time programmable memory for the hash algorithm and the hash value. In response to the occurrence of an event on the electronic device, such as at time of device power-up, the hash algorithm is applied against the stored terminal identifier, with the resultant hash value being compared against the stored hash value. If the two hash values fail to match, normal operation of the device is disabled.

A further embodiment of the invention is directed toward an apparatus configured to secure information in a memory of an electronic device, including a first memory having stored therein a cryptographic hash algorithm, a second memory having stored therein information related to the identitication of the electronic device; a third memory having stored therein a first hash value calculated by operation of the cryptographic hash algorithm on the stored information; and a processor for calculating, in response to an occurrence of a predetermined event, a second hash value of the stored information according to the stored cryptographic hash algorithm, and for comparing the second hash value to the first hash value, wherein the apparatus being arranged to disable the normal operation of the electronic device if the second hash value does not match the first hash value, and wherein the first memory and the third memory are one-time programmable memories.

### BRIEF DESCRIPTION OF THE DRAWINGS

These and other objects and advantages of the present invention will become more apparent and more readily appreciated to those skilled in the art upon reading the following description of the preferred embodiments, taken in conjunction with the accompanying drawings, wherein like reference numerals have been used to designate like elements, and wherein:
Figure 1 shows a component diagram of a secured information system;
Figure 2 shows a flow chart of a method for securing information in memory;
Figure 3 shows a flow chart of an exemplary method for securing information in memory;
Figure 4 shows a component diagram of a secured information system configured in accordance with an exemplary embodiment of the invention;
Figure 5 shows a flow chart of an exemplary method for securing information in memory;
Figure 6 shows a flow chart of an exemplary method for securing information in memory;
Figure 7 shows a component diagram of a secured information system;
Figure 8 shows a component diagram of a secured information system;
Figure 9 shows a component diagram of a secured information system; and
Figure 10 shows a component diagram of a secured information system.

### DETAILED DESCRIPTION OF THE PREFERRED EMBODIMENTS

In the following description, for purposes of explanation and not limitation, specific details are set forth in order to provide a thorough understanding of the present invention. However, it will be apparent to one skilled in the art that the present invention may be practiced in other embodiments that depart from these specific details. In other instances, detailed descriptions of well-known methods, devices, and circuits are omitted so as not to obscure the description of the present invention.

The method and terminology by which an individual terminal device, such as a cellular telephone or a personal digital assistant, can be uniquely identified has variously been described as a terminal identifier, an international mobile equipment identity, an electronic serial number, and the like. Within the present description of exemplary embodiments of the invention, for the sake of clarity and not limitation, the internal numeric or alpha-numeric representation by which a terminal device can be uniquely identified to a communications network will collectively be referred to as a "terminal ID." It should be emphasized that the term, "terminal device," as used herein, includes but is not limited to mobile radio communications equipment, such as mobile telephones and the like, and includes any device in which it is desired to ensure that one or more data items are not altered without authorization.

While the above discussion has focused on the need to secure the terminal ID in a terminal device, such as a mobile telephone, portable electronic devices have additional key segments of information stored within the devices that are preferred to be kept secure. In particular, a terminal device can be initialized or programmed with one or more control parameters and/or settings that control or limit the functionality of the device. For example, a code can be set in the device at the time of manufacture or at the time of registration of the device for use on a network that limits the device to be utilized on a particular network. Modifying this code could permit the terminal device access to different or multiple networks, possibly without being charged for accessing the network. Additionally, a memory location in the terminal device can be set to a particular parameter that permits, for example, the user to access the Internet with the terminal device. Network providers prefer to charge for some of these features and could lose income should the devices be susceptible to being modified such that these stored controls, settings, and parameters are modified. Exemplary embodiments of the present invention, while applied to securing terminal ID information in the memory of a terminal device, can be equally applied to secure various control, setting, and parameter information that is written and/or stored in one or more memory locations in the terminal device.

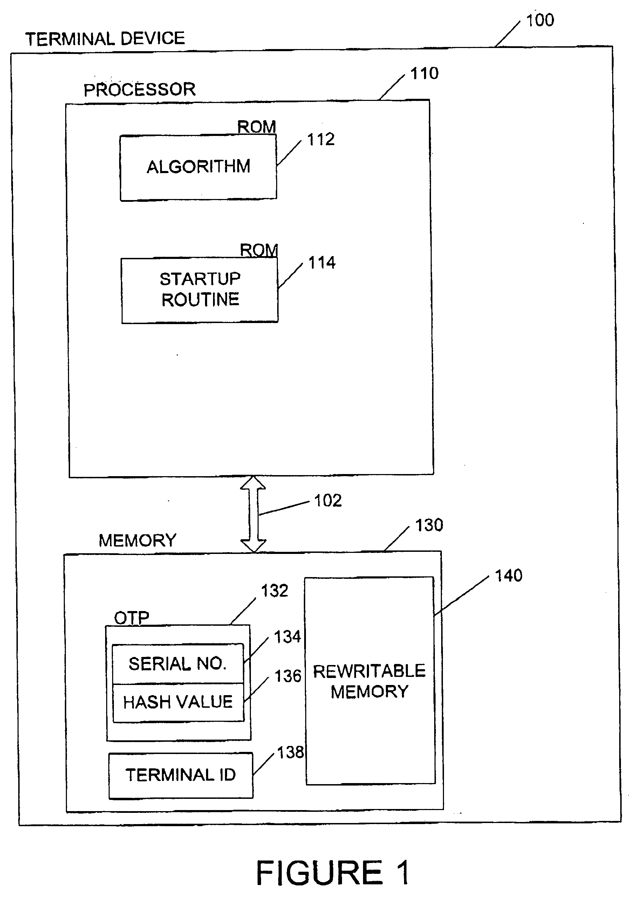

Referring now to Figure 1, there is shown a partial component view of an exemplary terminal device 100. At the time and place of manufacture of the terminal device 100, such as at a mobile telephone factory, the various components comprising the device 100 can be assembled to produce the device 100. The terminal device 100 includes at least one processor 110, although multiple processors can be implemented within the device 100 without detracting from the features of the invention. The device 100 also has one or more memory chips 130, with the processor 110 and the memory chip 130 being in electronic communication, whether wired, wireless, or optic, through the connection 102. Both the processor 110 and the memory chip 130 include computer readable media, such as components 112, 114, 132, 138, and 140, for the storage and retrieval of information. Each of these components can be separate devices in electronic communication with each other or can be integrated into a single component, or any combination of the above.

A cryptographic hash algorithm is stored in read only memory ("ROM") 112 on the processor 110. The particular cryptographic hash algorithm utilized can be any one of several known hash algorithms, such as the Secure Hash Algorithm (SHA-1) or the Message Digest Algorithm 5 (MD5). Additionally, a startup routine to initiate the information checking process by the cryptographic hash algorithm is stored in ROM 114. In the present application, the term, "read only memory," is intended to refer to memory that can be written only once, and is not alterable. The storage, or writing, of the algorithm and the routine, as software instructions or hardcoded firmware or the like, into locations 112 and 114 can take place at the site of and at the time of the manufacture of the terminal device 100, as contrasted with the time of manufacture of the processor 110 and/or the memory chip 130. The timing and the location where the software is stored into the device 100 or when and where the device 100 is assembled do not detract from the features of exemplary embodiments of the invention.

The serial number of the memory chip 130 is stored in one time programming ("OTP") memory 132 on the memory chip 130 at memory location 134. Within the meaning of the present application, OTP memory represents memory that can be written once and is then forever locked to preclude subsequent rewriting. Write Once Memories are OTP memories that are written once and forever locked. Alternatively, a lockable OTP memory can be written multiple times until it is forever locked by the issuance of a command. The terminal ID for the terminal device 100 is stored in memory location 138 in the memory chip 130, preferably, but not necessarily, at the time of manufacture of the terminal device 100. The terminal ID can be structured, for example, in conformance with a numbering standard such as that defined for GSM systems in the 3GPP TS 23.003 document, but adherence to such a standard is not required in exemplary embodiments of the invention. As used in the present application, the term, "one time programming," refers to a type of memory that permits a single recording of information into a memory area, whether bit by bit or in its entirety. Following the recording of the information, the memory is locked by any one of several known techniques that prevents any information from being written in that portion of memory even if the original information is first erased. Therefore, OTP memory is distinguished from read only memory, electronically erasable programmable read only memory (EEPROM), and rewritable memory 140 in that its contents cannot be rewritten once initialized with information.

While the cryptographic hash algorithm and the startup routine are shown in memory locations 112 and 114, respectively, in the processor 110, one or both of these routines can also be stored in the memory chip 130. However, to execute these routines on the processor 110, they can be routed to the processor 110 across the communications link 102 between the memory chip 130 and the processor 110. Such a transfer exposes the instructions in these routines to outside access and possible appropriation. Therefore, to better secure these routines from unauthorized access and/or modification, they are preferably stored on the processor 110.

According to one convention regarding the design and manufacture of memory chips, the space available in the OTP memory 132 of the memory chip 130 is 128 bits, of which 64 bits are taken up by the serial number in memory location 134. Because OTP memory can be written and locked by bit or by section, the serial number portion of the OTP memory 132 on the memory chip 130 can be written and locked at the time and place of manufacture of the memory chip 130; and the hash value in the memory location 136 portion of the OTP memory 132 can be written and secured at a later time when the terminal device is assembled. While the OTP memory 132 of the memory chip 130 is known to be 128 bits in some memory chips 130, this memory area can be larger or smaller. Preferably, the space remaining in the OTP memory 132 following the storage of the serial number is at least 60 bits of computer readable memory for storage of a hash value, although a less complex hash value can be stored in a memory space of less than 60 bits.

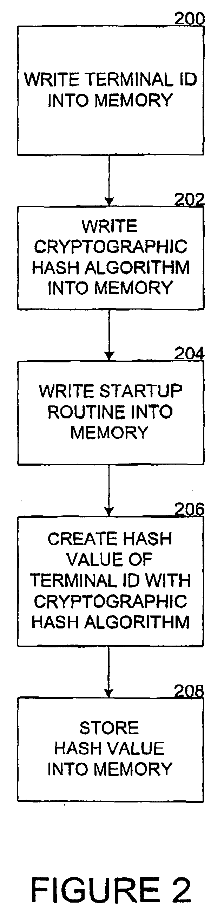

Figure 2 shows the processing steps of an exemplary method for securing terminal ID information in the memory of a terminal device 100. Step 200 shows the writing or storing of the terminal ID of the terminal device 100 into the memory location 138 on the memory chip 130. The cryptographic hash algorithm and the startup routine are stored in memory locations 112 and 114, respectively, at steps 202 and 204. While shown in a particular sequence in Figure 2, steps 200 - 204 can be performed in any order or in any combination without detracting from the features of exemplary embodiments of the invention. Following the storing of the cryptographic hash algorithm in memory 112, the algorithm is applied to the stored terminal ID to create a hash value, or checksum, which is then stored in OTP memory location 136 on the memory chip 130 at steps 206 and 208.

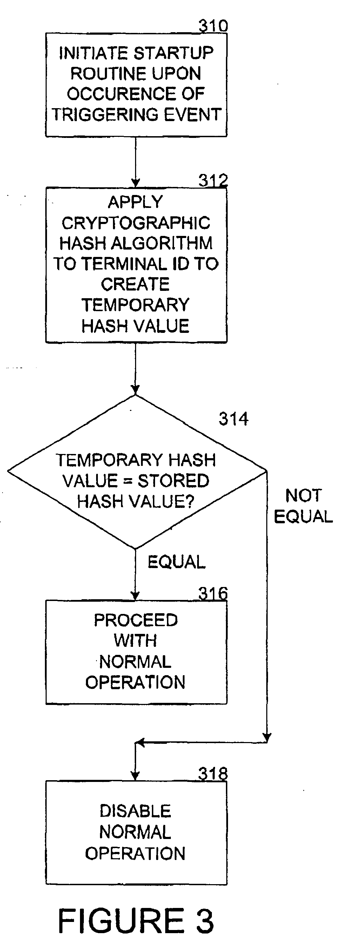

Referring now to Figure 3, there is shown the processing steps of an exemplary embodiment of the invention. Upon startup of the terminal device 100 or the occurrence of a predetermined triggering event in the terminal device 100, the startup routine stored in memory 114 is initiated at step 310. The triggering event can, for example, be the powering up of the terminal device 100. Alternatively, the triggering event can be the user attempting to activate or utilize one or more functions on the terminal device 100. For example, when the user attempts to access the Internet through the terminal device 100 or attempts to transmit or receive voice mail or email, the startup routine can be initiated at step 310 to verify that the terminal ID information has not been modified since this information was stored in the device 100. As an additional embodiment, the triggering event can be done periodically or at specific intervals or times.

At step 312, the cryptographic hash algorithm stored in memory 112 is invoked by the startup routine to be applied to the information presently stored in memory location 138. The resultant temporary, or second, hash value is compared at step 314 with the hash value that has been securely stored in memory location 136. If the two hash values match, then the user and the network provider can be assured the terminal ID in memory location 138 has not been appropriated from a another, legitimate terminal device 100, and the normal operation of the device 100 is allowed to proceed at step 316 to continue, for example, powering up the terminal device 100 or, alternatively, permiting the user to access one or more features available through the terminal device 100.

If the two hash values do not match, then one or more pieces of information stored in memory locations 112, 136, or 138 has been modified, and the normal operation of the device 100 is disabled at step 318, thereby, for example, blocking normal use of the terminal device 100 or one or more features on the device 100. Upon detection of such a modification of information within the device 100, the terminal device 100 can disable itself or, alternatively, can send a signal to the network to limit the use of the device 100 and even track its location through its base station connection. As an alternative feature and as part of the disable step 318, upon encountering a non-matching hash value at step 314, an embodiment of the invention can permit the terminal device 100 to proceed through power-up only to transmit an alarm signal to a remote location to alert the attempted use of a terminal device 100 with an altered terminal ID, followed by a power-down of the terminal device 100. Alternatively, step 318 can include display of an error message on the screen or graphical user interface of the terminal device 100.

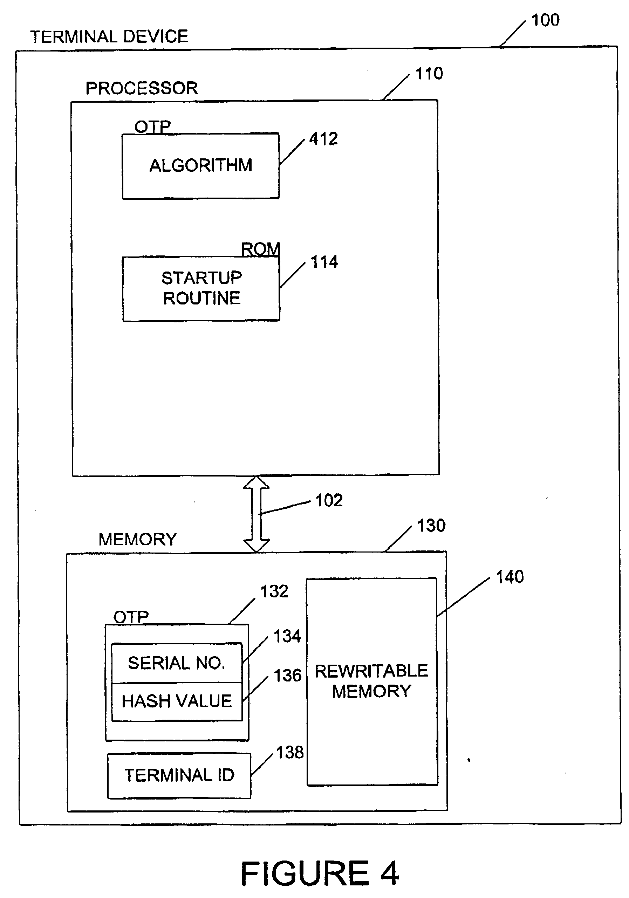

In an embodiment, as shown in Figure 4, the information stored in memory on the terminal device 100 is further secured by storing the cryptographic hash algorithm in OTP memory 412. In this embodiment, even if the hash value in OTP memory location 136 and the terminal ID in the memory chip 130 are modified through the adulteration or replacement of the memory chip 130, the cryptographic hash algorithm can remain secure, thereby ensuring a secure validation of the terminal ID information at step 314 of Figure 3.

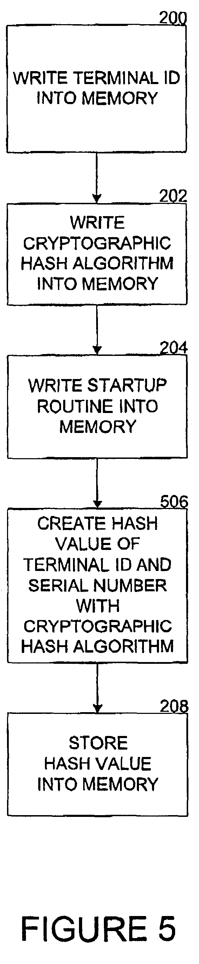

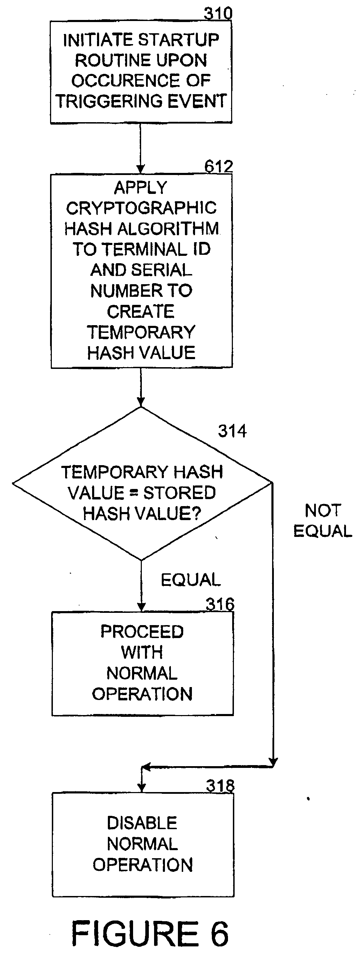

Referring now to Figures 1,5, and 6, an alternative embodiment of the invention will be discussed in which the hash value is expanded to include the serial number in memory location 134 of the memory chip 130. In this embodiment, most of the steps are the same as those counterpart steps shown in Figures 2 and 3, and for these steps a full description will not be repeated. However, steps 506 of Figure 5 and step 612 of Figure 6 are changed from their respective counterpart steps in Figures 2 and 3, respectively, in that they create and compare a hash value computed from the terminal ID stored in memory location 138 combined with the serial number of the memory chip 130. In this embodiment, the unique serial number stored in memory location 134 of the memory chip 130 is combined with the terminal ID stored in memory location 138 of the terminal device 100 to produce a hash value at step 506 by operation of the cryptographic hash algorithm stored in memory 112. The terminal ID and the serial number can be combined in any one of a number of known methods, such as concatenating the serial number to the beginning of the terminal ID. The result of the serial number/terminal ID combination and subsequent hash value is a hash value that is unique to the memory chip 130 and therefore the terminal device 100 since the serial number stored in memory location 134 is unique. At step 612, the cryptographic hash algorithm stored in memory 112 is applied to the serial number/terminal ID combination to create a temporary hash value for validating against the hash value stored in memory location 136. This embodiment can be further modified in the manner shown in Figure 4, wherein the cryptographic hash algorithm is secured in OTP memory 412.

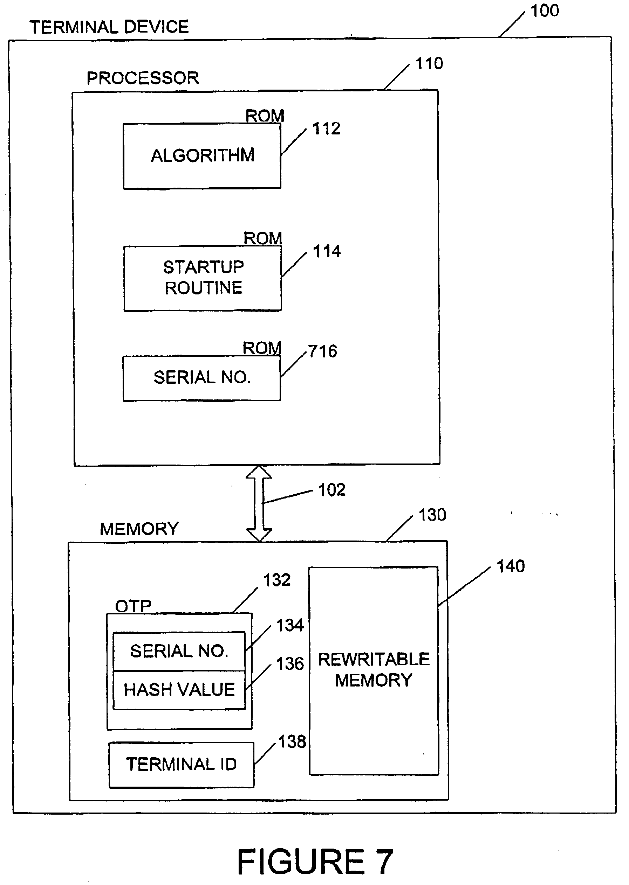

An alternative is shown in Figure 7, wherein the serial number of the processor 110 is stored in memory 716 and is used to create the hash value as shown in step 506. In this embodiment, the serial number of the processor 110 is written into ROM 716; although in a modified version of this embodiment, the memory 716 into which the processor's serial number is written can be OTP memory. Referring now to Figures 5, 6, and 7, the hash value stored in memory location 136 is expanded to include the serial number stored in memory 716 of the processor 110. In this embodiment, at step 506, a hash value is created from the information stored at the terminal ID memory location 138 combined with the information stored in the processor serial number memory 716. The unique serial number of the processor 110 is combined with the terminal ID of the terminal device 100 to produce a hash value by operation of the cryptographic hash algorithm stored in memory 112. The terminal ID and the serial number can be combined in any one of a number of known methods, such as concatenating the serial number to the beginning of the terminal ID. The result of the serial number/terminal ID combination and subsequent hash value is a hash value that is unique to the processor 110 and therefore the terminal device 100 since the serial number stored in memory 116 is unique. At step 612, the cryptographic hash algorithm stored in memory 112 is applied to the serial number/terminal ID combination to create a temporary hash value for validating against the hash value stored in memory location 136. This embodiment can be further modified in the manner shown in Figure 4, wherein the cryptographic hash algorithm is secured in OTP memory 412.

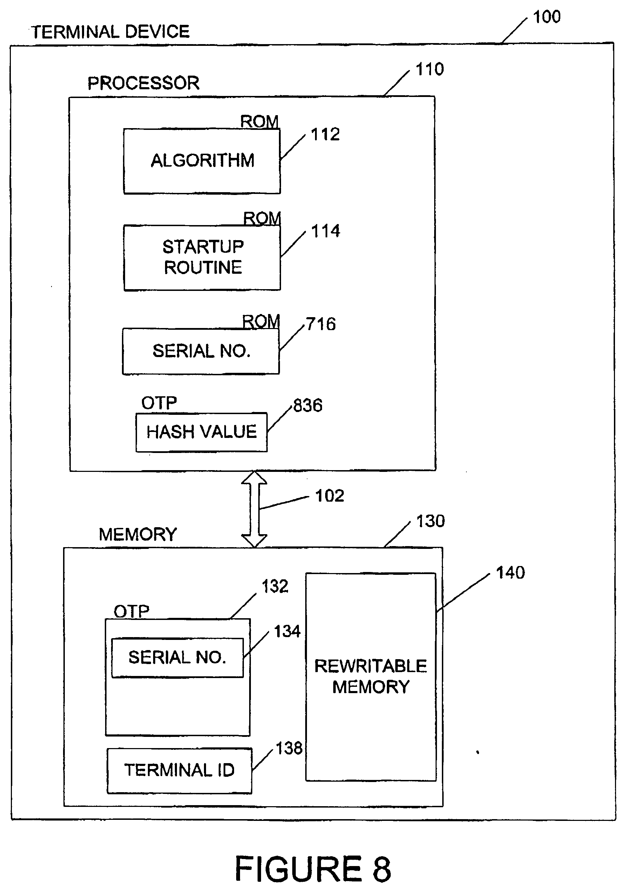

In yet another alternative, as shown in Figure 8, the hash value can be stored in one time programmable memory 836 on the processor 110 instead of on the memory chip 130. With this feature, the possibility is reduced that the hash value can be intercepted as it is routed to the processor 110 across the connecting link 102 to be, for example, compared with a temporary hash value, such as in step 314 of Figures 3 and 6. This embodiment can be further modified in the manner shown in Figure 4, wherein the cryptographic hash algorithm is secured in OTP memory 412 on the processor 110. Correspondingly, the respective features shown in Figures 5 and 6 of including the memory chip serial number and/or the processor serial number in the calculated hash value can be included in this embodiment of the invention to render the hash value more difficult to decipher or guess.

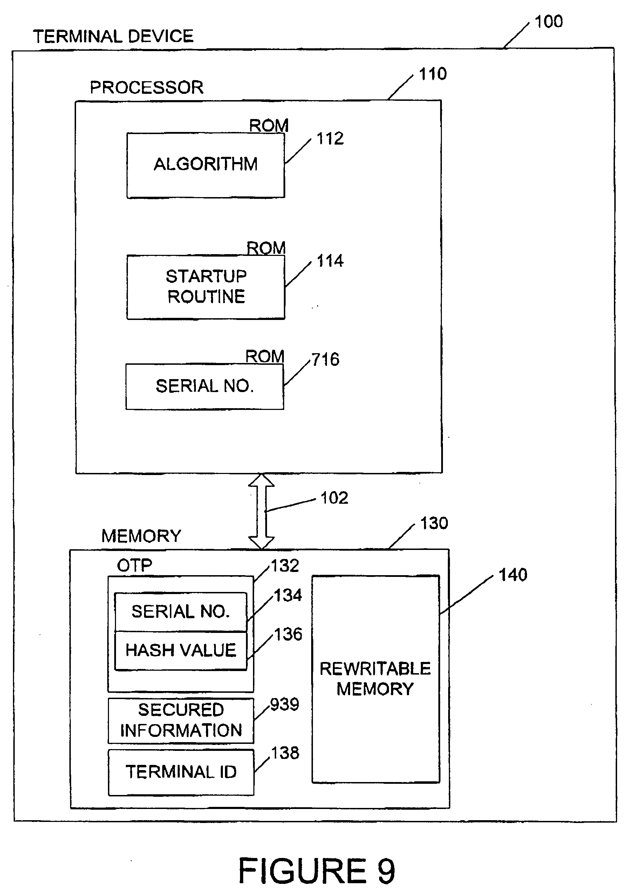

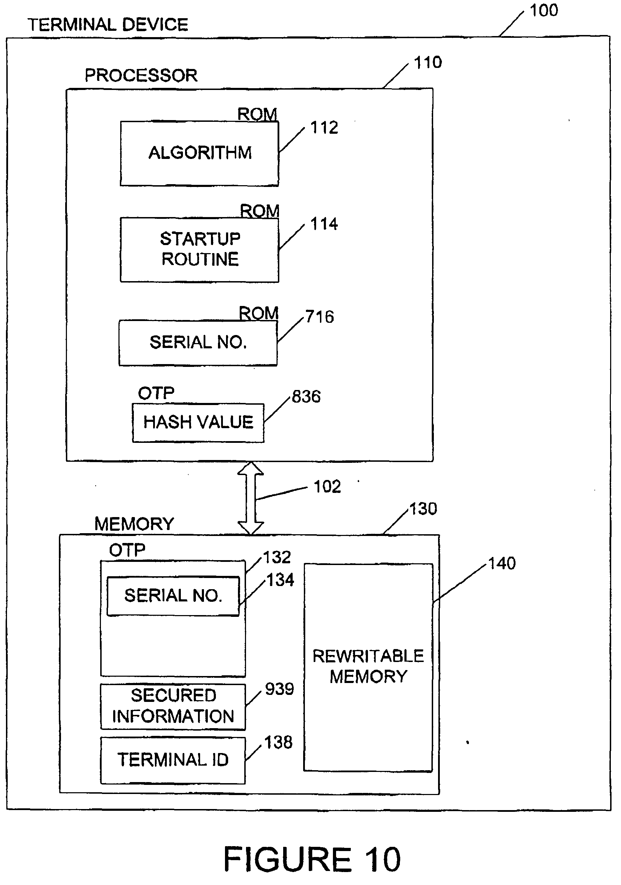

Additional alternatives are shown in Figures 9 and 10, in which information 939 can be secured in the memory 130 of an electronic device 100. In addition to the terminal id 138 of the electronic device 100, further information can be stored on the terminal device 100 that a user, owner, manufacturer, or distributor may want to secure from alteration. Such information can include the software loaded and/or stored on the terminal device. For example, the manufacturer of the terminal device 100 may want to preserve the startup images that are displayed to the user upon startup, or powerup, of the terminal device. The software driving the startup process and images can be stored as secured information 939 in the memory 130 of the terminal device 100. Additionally, the distributer of the terminal device may, for example, want to preserve the programmed language capabilities of the device 100 by storing all or part of the software controlling these capabilities at the secured information location 939. In this manner, software related to the operation and control of the terminal device can be secured in the memory of the device 100.

In these alternatives, the operation of the hash algorithm is expanded to operate on the secured information 939 in a manner similar to the inclusion of the serial numbers 134 and 716 as shown in Figures 5 - 7. The hash algorithm can operate on the secured information 939 to produce a hash value to be compared against the hash value information stored at 136. Alternatively, as shown in Figure 10, the hash value can be stored in OTP memory 836 on the processor 110. As an additional feature of the invention, the hash algorithm can operate on any combination of the terminal id 138, the serial number 134 and/or 716, and the secured information 939 to create the hash value.

Alternatively, the secured information 939 can also be controls, calibration settings, and/or parameters within the terminal device 100. For example, the tuning parameters and/or the transceiver calibration data for the terminal device 100 can be secured in memory location 939 on the terminal device 100, with this information being utilized by the hash algorithm to compute a hash value for comparing against the stored hash value 136 or 836. While Figures 9 and 10 show the secured information stored in memory 939 on the memory 130 of the terminal device 100, the secured information can equally be stored on the processor 110 of the terminal device 100.

## Claims

1. An apparatus configured to secure information in a memory of an electronic device (100), comprising:
a first memory (412) having stored therein a cryptographic hash algorithm;
a second memory (138) having stored therein information related to the identification of the electronic device (100);
a third memory (136, 836) having stored therein a first hash value calculated by operation of the cryptographic hash algorithm on the stored information; and
a processor (110) for calculating, in response to an occurrence of a predetermined event, a second hash value of the stored information according to the stored cryptographic hash algorithm, and for comparing the second hash value to the first hash value, wherein the apparatus being arranged to disable the normal operation of the electronic device if the second hash value does not match the first hash value;
wherein
the first memory (412) and the third memory (136) are one-time programmable memories.

2. The apparatus according to claim 1, wherein the electronic device (100) is a mobile device for connecting to a communications network.

3. The apparatus according to claim 1, wherein the first memory (412) is located on the processor (110) of the electronic device (100).

4. The apparatus according to claim 1, wherein the third memory (836) is located on the processor (110) of the electronic device (100), so that the first hash value is stored on the processor (110).

5. The apparatus according to claim 1, wherein the third memory (836) is located on the processor (110) of the electronic device (100), so that the first hash value is stored in memory (836) on the processor (110) of the electronic device (100).

6. The apparatus according to claim 1, wherein the predetermined event is a powering up of the electronic device (100) or an accessing of a predetermined feature by the user of the electronic device (100).

7. The apparatus according to claim 1, wherein disabling normal operation of the electronic device (100) comprises powering down the electronic device (100).

8. The apparatus according to claim 1, further comprising a startup routine, wherein the startup routine is adapted to be initiated in response to an occurrence of the predetermined event, and to invoke the stored cryptographic hash algorithm.

9. A method for securing information in the memory of a device (100), comprising:
storing a cryptographic hash algorithm in a one-time programmable memory (412) on the device (100);
storing information related to the identification of the device (100) in a memory (134) on the device (100);
storing a first hash value in a one-time programmable memory (136, 836) on the device (100);
in response to an occurrence of a predetermined event on the device (100), calculating a second hash value according to the stored information and the stored cryptographic hash algorithm;
comparing the second hash value to the first hash value; and
disabling normal operation of the device (100) if the second hash value does not match the first hash value.

10. The method according to claim 9, wherein the device (100) is a mobile device for connecting to a communications network.

11. The method according to claim 9, further including storing the cryptographic hash algorithm in a memory (412) on a processor (110) of the device.

12. The method according to claim 9, further including calculating the first hash value according to the stored information and the cryptographic hash algorithm.

13. The method according to claim 12, wherein the calculated first hash value is stored in the one-time programmable memory (836) on a processor (110) of the device.

14. The method according to claim 9, wherein the predetermined event is a powering up of the device (100) or an accessing of a predetermined feature by the user of the device (100).

15. The method according to claim 9, wherein disabling normal operation of the electronic device (100) comprises powering down the electronic device (100).

16. The method according to claim 9, further comprising storing a startup routine in the device (100), wherein the startup routine is initiated in response to an occurrence of the predetermined event, and the startup routine invokes the stored cryptographic hash algorithm.

## Patentansprüche

1. Gerät, das konfiguriert ist, um Informationen in einem Speicher einer elektronischen Vorrichtung (100) zu sichern, umfassend:
einen ersten Speicher (412), in dem ein kryptographischer Hash-Algorithmus gespeichert ist;
einen zweiten Speicher (138), in dem Informationen in Bezug auf die Identifizierung der elektronischen Vorrichtung (100) gespeichert sind;
einen dritten Speicher (136, 836), in dem ein erster Hash-Wert vorhanden ist, der per Betrieb des kryptographischen Hash-Algorithmus auf der gespeicherten Information berechnet ist; und
einen Prozessor (110) zur Berechnung eines zweiten Hash-Wertes der gespeicherten Information gemäß dem gespeicherten kryptographischen Hash-Algorithmus als Antwort auf ein Auftreten eines vorbestimmten Ereignisses und zum Vergleich des zweiten Hash-Wertes mit dem ersten Hash-Wert, wobei das Gerät angeordnet ist, um den normalen Betrieb der elektronischen Vorrichtung zu deaktivieren, wenn der zweite Hash-Wert nicht zu dem ersten Hash-Wert passt;
wobei
der erste Speicher (412) und der dritte Speicher (136) einmalige, programmierbare Speicher sind.

2. Gerät gemäß Anspruch 1, bei dem die elektronische Vorrichtung (100) eine mobile Vorrichtung für den Anschluss an ein Kommunikationsnetzwerk ist.

3. Gerät gemäß Anspruch 1, bei dem der erste Speicher (412) auf dem Prozessor (110) der elektronischen Vorrichtung (100) lokalisiert ist.

4. Gerät gemäß Anspruch 1, bei dem der dritte Speicher (836) auf dem Prozessor (110) der elektronischen Vorrichtung (100) derart lokalisiert ist, dass der erste Hash-Wert auf dem Prozessor (110) gespeichert ist.

5. Gerät gemäß Anspruch 1, bei dem der dritte Speicher (836) auf dem Prozessor (110) der elektronischen Vorrichtung (100) derart lokalisiert ist, dass der erste Hash-Wert im Speicher (836) auf dem Prozessor (110) der elektronischen Vorrichtung (100) gespeichert ist.

6. Gerät gemäß Anspruch 1, bei dem das vorbestimmte Ereignis ein Einschalten der elektronischen Vorrichtung (100) oder ein Zugreifen eines vorbestimmten Merkmals durch den Benutzer der elektronischen Vorrichtung (100) ist.

7. Gerät gemäß Anspruch 1, bei dem die Deaktivierung des normalen Betriebs der elektronischen Vorrichtung (100) das Abschalten der elektronischen Vorrichtung (100) umfasst.

8. Gerät gemäß Anspruch 1, das weiterhin eine Anfahr-Routine umfasst, wobei die Anfahr-Routine geeignet ist, als Antwort auf ein Auftreten des vorbestimmten Ereignisses initiiert zu werden und den gespeicherten kryptographischen Hash-Algorithmus zu aktivieren.

9. Verfahren zur Sicherung von Informationen in dem Speicher einer Vorrichtung (100), umfassend;
Speichern eines kryptographischen Hash-Algorithmus in einem einmaligen, programmierbaren Speicher (412) auf der Vorrichtung (100);
Speichern von Informationen in Bezug auf die Identifizierung der Vorrichtung (100) in einem Speicher (134) auf der Vorrichtung (100);
Speichern eines ersten Hash-Wertes in einem einmaligen, programmierbaren Speicher (136, 836) auf der Vorrichtung (100); als Antwort auf ein Auftreten eines vorbestimmten Ereignisses auf der Vorrichtung (100), Berechnung eines zweiten Hash-Wertes gemäß der gespeicherten Information und dem gespeicherten kryptographischen Hash-Algorithmus;
Vergleich des zweiten Hash-Wertes mit dem ersten Hash-Wert; und
Deaktivierung des normalen Betriebs der Vorrichtung (100), wenn der zweite Hash-Wert nicht zu dem ersten Hash-Wert passt.

10. Verfahren gemäß Anspruch 9, bei dem die Vorrichtung (100) eine mobile Vorrichtung für den Anschluss an ein Kommunikationsnetzwerk ist.

11. Verfahren gemäß Anspruch 9, das weiterhin das Speichern des kryptographischen Hash-Algorithmus in einem Speicher (412) auf einem Prozessor (110) der Vorrichtung umfasst.

12. Verfahren gemäß Anspruch 9, das weiterhin die Berechnung des ersten Hash-Werts für die gespeicherten Informationen und des kryptographischen Hash-Algorithmus umfasst.

13. Verfahren gemäß Anspruch 12, bei dem der berechnete erste Hash-Wert in dem einmaligen, programmierbaren Speicher (836) auf einem Prozessor (110) der Vorrichtung gespeichert wird.

14. Verfahren gemäß Anspruch 9, bei dem das vorbestimmte Ereignis ein Einschalten der Vorrichtung (100) oder ein Zugreifen eines vorbestimmten Merkmals durch den Benutzer der Vorrichtung (100) ist.

15. Verfahren gemäß Anspruch 9, bei dem die Deaktivierung des normalen Betriebs der elektronischen Vorrichtung (100) das Abschalten der elektronischen Vorrichtung (100) umfasst.

16. Verfahren gemäß Anspruch 9, das weiterhin das Speichern einer Anfahr-Routine in der Vorrichtung (100) umfasst, bei der die Anfahr-Routine als Antwort auf ein Auftreten des vorbestimmten Ereignisses initiiert wird und die Anfahr-Routine den gespeicherten kryptographischen Hash-Algorithmus aktiviert.

## Revendications

1. Appareil configuré pour sécuriser des informations dans une mémoire d'un dispositif électronique (100), comprenant :
une première mémoire (412) ayant un algorithme de hachage cryptographique stocké en son sein ;
une deuxième mémoire (138) ayant des informations stockées en son sein liées à l'identification du dispositif électronique (100) ;
une troisième mémoire (136, 836) ayant une première valeur de hachage stockée en son sein calculée par la mise en oeuvre de l'algorithme de hachage cryptographique sur les informations stockées ; et
un processeur (110) pour calculer, en réponse à une survenance d'un événement prédéterminé, une seconde valeur de hachage des informations stockées selon l'algorithme de hachage cryptographique stocké, et pour comparer la seconde valeur de hachage à la première valeur de hachage, dans lequel l'appareil est agencé pour désactiver le fonctionnement normal du dispositif électronique si la seconde valeur de hachage ne correspond pas à la première valeur de hachage ; dans lequel
la première mémoire (412) et la troisième mémoire (136) sont des mémoires programmables une seule fois.

2. Appareil selon la revendication 1, dans lequel le dispositif électronique (100) est un dispositif mobile pour connexion à un réseau de communication.

3. Appareil selon la revendication 1, dans lequel la première mémoire (412) est située sur le processeur (110) du dispositif électronique (100).

4. Appareil selon la revendication 1, dans lequel la troisième mémoire (836) est située sur le processeur (110) du dispositif électronique (100), de sorte que la première valeur de hachage est stockée sur le processeur (110).

5. Appareil selon la revendication 1, dans lequel la troisième mémoire (836) est située sur le processeur (110) du dispositif électronique (100), de sorte que la première valeur de hachage est stockée dans la mémoire (836) sur le processeur (110) du dispositif électronique (100).

6. Appareil selon la revendication 1, dans lequel l'événement prédéterminé est une mise sous tension du dispositif électronique (100) ou un accès d'une particularité prédéterminée de l'utilisateur du dispositif électronique (100).

7. Appareil selon la revendication 1, dans lequel la désactivation du fonctionnement normal du dispositif électronique (100) comprend la mise hors tension du dispositif électronique (100).

8. Appareil selon la revendication 1, comprenant en outre un sous-programme de démarrage, dans lequel le sous-programme de démarrage est conçu pour être amorcé en réponse à une survenance de l'événement prédéterminé, et pour invoquer l'algorithme de hachage cryptographique stocké.

9. Procédé pour sécuriser des informations dans la mémoire d'un dispositif (100), comprenant :
le stockage d'un algorithme de hachage cryptographique dans une mémoire programmable une seule fois (412) sur le dispositif (100) ;
le stockage d'informations liées à l'identification du dispositif (100) dans une mémoire (134) sur le dispositif (100) ;
le stockage d'une première valeur de hachage dans une mémoire programmable une seule fois (136, 836) sur le dispositif (100) ;
en réponse à une survenance d'un événement prédéterminé sur le dispositif (100), le calcul d'une seconde valeur de hachage selon les informations stockées et l'algorithme de hachage cryptographique stocké ;
la comparaison de la seconde valeur de hachage à la première valeur de hachage ; et
la désactivation du fonctionnement normal du dispositif (100) si la seconde valeur de hachage ne correspond pas à la première valeur de hachage.

10. Procédé selon la revendication 9, dans lequel le dispositif (100) est un dispositif mobile pour connexion à un réseau de communication.

11. Procédé selon la revendication 9, incluant en outre le stockage de l'algorithme de hachage cryptographique dans une mémoire (412) sur un processeur (110) du dispositif.

12. Procédé selon la revendication 9, incluant en outre le calcul de la première valeur de hachage selon les informations stockées et l'algorithme de hachage cryptographique.

13. Procédé selon la revendication 12, dans lequel la première valeur de hachage calculée est stockée dans la mémoire programmable une seule fois (836) sur un processeur (110) du dispositif.

14. Procédé selon la revendication 9, dans lequel l'événement prédéterminé est une mise sous tension du dispositif (100) ou un accès d'une particularité prédéterminée par l'utilisateur du dispositif (100).

15. Procédé selon la revendication 9, dans lequel la désactivation du fonctionnement normal du dispositif électronique (100) comprend la mise hors tension du dispositif électronique (100).

16. Procédé selon la revendication 9, comprenant en outre le stockage d'un sous-programme de démarrage dans le dispositif (100), dans lequel le sous-programme de démarrage est amorcé en réponse à une survenance de l'événement prédéterminé, et le sous-programme de démarrage invoque l'algorithme de hachage cryptographique stocké.
